# NEUE EUROPÄISCHE PATENTSCHRIFT

(11) **EP 0 553 114 B2**
(45) Veröffentlichungstag und Bekanntmachung des Hinweises auf die Entscheidung über den Einspruch: **06.05.2004**
(45) Hinweis auf die Patenterteilung: 13.12.1995
(21) Anmeldenummer: 91916565.4
(22) Anmeldetag: 17.09.1991
(51) Int. Cl.: C25D 5/50, C25D 3/56

(54) **BAUTEIL AUS STAHL MIT GALVANISCH AUFGEBRACHTER KORROSIONSSCHUTZSCHICHT**
STEEL COMPONENT WITH ELECTRO-DEPOSITED ANTI-CORROSION LAYER
ELEMENT EN ACIER AVEC COUCHE ANTICORROSION DEPOSEE PAR ELECTROLYSE

(30) Priorität: 20.10.1990 DE 4033459; 02.08.1991 DE 4125585
(43) Veröffentlichungstag der Anmeldung: 04.08.1993
(73) Patentinhaber: INA-Schaeffler KG, 91074 Herzogenaurach (DE)
(72) Erfinder: GRELL, Karl-Ludwig, D-8521 Aurachtal (DE); WOLTMANN, Reiner, D-8522 Herzogenaurach (DE)
(86) Internationale Anmeldenummer: PCT/EP1991/001769
(87) Internationale Veröffentlichungsnummer: WO 1992/007117

(56) Entgegenhaltungen:
- EP-A- 0 288 677
- DE-A- 3 316 678
- DE-A- 3 414 048
- DE-A- 3 933 896
- DE-TM- 7 918 966
- US-A- 4 908 280
- METAL FINISHING, November 1971, Seiten 42 - 48; SAROJAMMA: 'electrodeposition of tungsten alloys' siehe Seite 44, Spalte 2 - Seite 45, Spalte 1
- Thyssen Edelstahl Technische Berichte 11. Band, September 1985, Heft 2, Seiten 194-196
- SAE Technical Paper Series, 1984, "Extending Bearing Life in Off-Highway Equipment"
- DIN 50150
- SKF-Hauptkatalog 4000T, 1989, Seiten 126-127
- Dettner/Elze "Handbuch der Galvanotechnik", 1963-1966, Bd.I, S. 7, 28-29,649-650, Bd. II, S. 283-284
- Armoloy Technology Coating, Technische Spezifikationen der ATC Metalltechnologie GmbH & Co., 1987
- Metall, 43/12 (1989), S.1142-1146: "Electrodeposition Behaviour of Ternary Zinc-Iron-Nickel Alloys"
- Prospekt "STAR Kugelrollen", 1987
- DIN 69051
- Deutsche Star "STAR Das Linearprogramm", 1989
- Thomson Industries "Linear Motion Designer's Guide", 1984
- Technische Oberflächen, Oberflächenbeschaffenheit, Oberflächenatlas", Beuth Kommentare, 1981, S. 32-35
- "Wälzlager, Theorie und Praxis", 1987, S. 368 und die im Prüfungsverfahren zitierten Dokumente
- "Das Techniker Handbuch", 1985, S. 670-671, "Wälzlager, Theorie und Praxis", 1987, S. 19-22

## Beschreibung

Die Erfindung betrifft ein Wälzlagerbauteil aus Stahl, das an seiner Oberfläche mit einer Schutzschicht aus einem metallischen Werkstoff versehen ist.

Aus dem Dokument "Metal Finishing, November 1971, Seiten 42-48: Sarojamma: Electrodeposition of Tungsten Alloys" ist die galvanische Abscheidung einer mit 0,5 µm extrem dünnen Schicht aus einer Wolframlegierung auf Stahl zum Schutz gegen Korrosion bekannt. Einen Hinweis auf Wälzlagerbauteile enthält dieses Dokument nicht.

Aus dem Dokument DE-A-3 414 048 ist ein Verfahren zum Herstellen von Stahlteilen bekannt, welche galvanisch mit einer Zink-Nickel-Legierung beschichtet werden. Nach diesem Verfahren wird jeweils das Stahlteil zunächst in einem sauren Bad, das Zink und Nickel, beispielsweise in Form von Zinksulfat und Nickelsulfat enthält, vorgalvanisiert. Nach dieser Grundierungsbehandlung erfolgt anschließend galvanisch der Aufbau einer weiteren Schicht, wobei das Galvanisierungsbad Zink, Nikkel, Titan und Aluminium enthält. Diese Vorgehensweise wird gewählt, weil erkannt wurde, daß die Adhäsion der Zink-Nickel-Legierung gegenüber einem Stahlsubstrat durch ein Vorgalvanisieren der Stahlteile vor dem eigentlichen Galvanisieren mit Zink und Nickel verbessert werden kann.

Für die Schichtdicke der vorgalvanisierten Schicht des bekannten Verfahrens werden die Werte von 0,5 bis 1,0 µm angegeben, wobei jedoch keine Aussagen über den Rauhigkeitszustand der Oberfläche oder die Härte des zu beschichtenden Stahlteils gemacht werden. Aus dieser Vorveröffentlichung ist auch bekannt, dem Hauptgalvanisierungsbad weitere Metalle, wie Kobalt, Chrom, Eisen und Magnesium, zuzusetzen. Dieses Verfahren ist arbeitsaufwendig, da es zusätzlich zu der Hauptgalvanisierung grundsätzlich eine Vorgalvanisierung der Stahlteile vorschreibt.

Das Dokument EP-A-0 288 677 beschreibt die Beschichtung eines Maschinenelements, beispielsweise eines Wälzlagerbauteils, mit einem Gleitlagerwerkstoff. Aufgrund dieser Beschichtung soll an Flächen, die neben einer Wälzbeanspruchung auch einer Gleitbeanspruchung ausgesetzt sind, der Verschleiß reduziert werden. Dabei liegt die Dicke der Beschichtung in der Größenordnung der Oberflächenrauhigkeit des zu beschichtenden Bauteils. Ausgehend von der Erkenntnis, daß zahlreiche Versuche, Wälz- und Gleitverschleiß von Maschinenbauteilen durch Beschichtungen, beispielsweise galvanische Beschichtungen zu lösen, bisher gescheitert waren, wird in diesem Dokument zwingend vorgeschrieben, die Beschichtung mit einem PVD-Verfahren aufzubringen.

Unter dem Begriff PVD (Physical Vapour Deposition) werden nach dem Dokument "Thyssen Edelstahl Technische Berichte 11. Band September 1985 Heft 2 Seiten 194-196" Beschichtungsverfahren zusammengefaßt, mit denen Metalle und ihre Legierungen durch Zufuhr thermischer Energie oder kinetischer Energie mittels Teilchenbeschuß im Vakuum abgeschieden werden. Zu diesen bei Temperaturen zwischen 500 und 550 °C ablaufenden Verfahren zählen das Aufdampfen im Hochvakuum, das Ionenplattieren (Ion Plating) und die Kathodenzerstäubung (Sputtering).

Der Erfindung liegt die Aufgabe zugrunde, ein wirtschaftlich herstellbares Wälzlagerbauteil aus Stahl anzugeben, welches eine dünne, aber sicher wirkende Korrosionsschutzschicht aufweist.

Diese Aufgabe wird bei einem Wälzlagerbauteil aus Stahl, das an seiner Oberfläche mit einer binären Schutzschicht aus Zn Co, Zn Fe oder Zn Ni versehen ist, die dünner ist als die Oberflächenrauhigkeit des gehärteten Bauteils, die dieses vor dem Aufbringen der Schutzschicht hatte, wobei das Bauteil eine Härte von mindestens 650 HV aufweist und die Schutzschicht als Korrosionsschutzschicht galvanisch aufgebracht ist, und wobei die Oberflächenrauhigkeit RZ des Bauteils 0,3 bis 9,0 µm und die Schichtdicke der Korrosionsschutzschicht 0,1 bis 3,0 µm beträgt.

Ein erfindungsgemäß hergestelltes Bauteil ermöglicht eine wirtschaftliche Fertigung. Es bietet den Vorteil, daß die dünne Korrosionsschutzschicht durch einen einzigen Galvanisierungsvorgang ohne weitere Nachbehandlung aufgebracht wird. Infolge der geringen Schichtdicke wird die Maßgenauigkeit des Bauteils nicht negativ beeinflußt. Bei dem Wälzlagerbauteil bleibt die tribologische Beanspruchung, wie Wälzkörperüberrollung, ohne negative Folgen für die Lebensdauer. Bei dieser Beanspruchung der äußersten Randzone drücken sich die duktilen Nichteisenschichten in das Rauhigkeitsprofil der Laufbahnfeingestalt ein und haften dort fest. Die überschüssigen Werkstoffanteile werden aus der Druckzone der Laufbahn herausgequetscht. Dadurch ist nach kurzer Einlaufzeit von wenigen Zyklen ein voll funktionsfähiges Wälzlager mit hohen Korrosionsschutzeigenschaften gegeben. Die Wälzermüdungsfestigkeit wird durch die beschriebenen Vorgänge des Einwalzens in die Rauhigkeitstiefe nicht verschlechtert, sondern verbessert. Bei geschliffenen Wälzlagerlaufbahnen wird eine feine, nicht zu glatte Oberflächentopografie erzeugt, also mit Rauhigkeitswerten RZ in der Größenordnung von 0,3 µm, so daß sich ein kostenaufwendiges Honen einsparen läßt und nach dieser Beschichtung eine Verbesserung der Laufeigenschaften des Wälzlagers mit der Korrosionsschutzschicht vorliegt.

Vorteilhaft hat die Korrosionsschutzschicht eine Dicke, die einem Viertel der Dicke der Oberflächenrauhigkeit der Laufbahn des gehärteten Wälzlagerbauteils entspricht. Bei Wahl einer Zink-Nickel-Schicht beträgt deren Schichtdicke vorteilhaft maximal 1,5 µm.

Bei dem erfindungsgemäßen Wälzlagerbauteil wird erreicht, daß sich bei Inbetriebnahme des Wälzlagers die aufgebrachte Korrosionsschutzschicht in das Rauhigkeitsprofil der Oberfläche einarbeitet und damit keinen negativen Einfluß auf die Toleranzen der Bauteile ausüben kann. Durch den feinsten Abrieb innerhalb der Rauhigkeitstiefe der Wälzlagerlaufbahn werden Schichtpartikel eingewalzt, die den Rostschutz der Laufbahn und somit des Wälzlagers erhöhen und eine Art Notlauf bzw. Trockenschmierung darstellen. Da die Schichten der erfindungsgemäßen Bauteile Schichtdicken aufweisen, die etwa nur 10 % der bisher bekannten Schichtdicken betragen, stellen diese Bauteile auch einen besonderen Beitrag zum Umweltschutz unter dem Gesichtspunkt der Minimierung der Umweltbelastung dar.

## Patentansprüche

1. Wälzlagerbauteil aus Stahl, das eine Härte von mindestens 650 HV aufweist und an seiner Oberfläche mit einer galvanisch aufgebrachten binären Korrosionsschutzschicht, die eine ZnCo-Schicht ist und dünner ist als die Oberflächenrauhigkeit des gehärteten Bauteils, die dieses vor dem Aufbringen der Schutzschicht hatte, wobei die Oberflächenrauhigkeit RZ des Bauteils 0,3 bis 9,0 µm und die Schichtdicke der Korrosionsschutzschicht 0,1 bis 3,0 µm beträgt.

2. Wälzlagerbauteil aus Stahl, das eine Härte von mindestens 650 HV aufweist und an seiner Oberfläche mit einer galvanisch aufgebrachten binären Korrosionsschutzschicht, die eine ZnFe-Schicht ist und dünner ist als die Oberflächenrauhigkeit des gehärteten Bauteils, die dieses vor dem Aufbringen der Schutzschicht hatte, wobei die Oberflächenrauhigkeit RZ des Bauteils 0,3 bis 9,0 µm und die Schichtdicke der Korrosionsschutzschicht 0, 1 bis 3,0 µm beträgt.

3. Wälzlagerbauteil aus Stahl, das eine Härte von mindestens 650 HV aufweist und an seiner Oberfläche mit einer galvanisch aufgebrachten binären Korrosionsschutzschicht die eine ZnNi-Schicht ist und dünner ist als die Oberflächenrauhigkeit des gehärteten Bauteils, die dieses vor dem Aufbringen der Schutzschicht hatte, wobei die Oberflächenrauhigkeit RZ des Bauteils 0,3 bis 9,0 µm und die Schichtdicke der Korrosionsschutzschicht 0,1 bis 3,0 µm beträgt.

4. Bauteil nach Anspruch 1, **dadurch gekennzeichnet, daß** die Korrosionsschutzschichtdicke ein Viertel der Oberflächenrauhigkeit der Laufbahn des gehärteten Wälzlagerbauteils ist.

5. Bauteil nach Anspruch 3, **dadurch gekennzeichnet, daß** die Dicke der ZnNi-Schicht maximal 1,5 µm beträgt.

## Claims

1. Rolling bearing component of steel having a hardness of at least 650 HV and comprising on its surface an electrolytically applied binary anti-corrosion coating that is a ZnCo coating and is thinner than the surface roughness that the hardened component had prior to the application of the protective coating, the surface roughness RZ of the component being 0.3 to 9.0 µm and the thickness of the anti-corrosion coating being 0.1 to 3.0 µm.

2. Rolling bearing component of steel having a hardness of at least 650 HV and comprising on its surface an electrolytically applied binary anti-corrosion coating that is a ZnFe coating and is thinner than the surface roughness that the hardened component had prior to the application of the protective coating, the surface roughness RZ of the component being 0.3 to 9.0 µm and the thickness of the anti-corrosion coating being 0.1 to 3.0 µm.

3. Rolling bearing component of steel having a hardness of at least 650 HV and comprising on its surface an electrolytically applied binary anti-corrosion coating that is a ZnNi coating and is thinner than the surface roughness that the hardened component had prior to the application of the protective coating, the surface roughness RZ of the component being 0.3 to 9.0 µm and the thickness of the anti-corrosion coating being 0.1 to 3.0 µm.

4. Component according to claim 1, **characterised in that** the thickness of the anti-corrosion coating is a quarter of the surface roughness of the raceway of the hardened rolling bearing component.

5. Component according to claim 3, **characterised in that** the thickness of the ZnNi coating is at the most 1.5 µm.

## Revendications

1. Composant de palier à roulement en acier ayant une dureté d'au moins 650 HV et dont la surface est munie d'une couche anticorrosive binaire déposée par électrolyse qui est une couche ZnCo et est plus mince que la rugosité superficielle que le composant durci avait avant la déposition de la couche de protection, la rugosité superficielle RZ du composant étant de 0,3 à 9,0 µm et l'épaisseur de la couche anticorrosive étant de 0,1 à 3,0 µm.

2. Composant de palier à roulement en acier ayant une dureté d'au moins 650 HV et dont la surface est munie d'une couche anticorrosive binaire déposée par électrolyse qui est une couche ZnFe et est plus mince que la rugosité superficielle que le composant durci avait avant la déposition de la couche de protection, la rugosité superficielle RZ du composant étant de 0,3 à 9,0 µm et l'épaisseur de la couche anticorrosive étant de 0,1 à 3,0 µm.

3. Composant de palier à roulement en acier ayant une dureté d'au moins 650 HV et dont la surface est munie d'une couche anticorrosive binaire déposée par électrolyse qui est une couche ZnNi et est plus mince que la rugosité superficielle que le composant durci avait avant la déposition de la couche de protection, la rugosité superficielle RZ du composant étant de 0,3 à 9,0 µm et l'épaisseur de la couche anticorrosive étant de 0,1 à 3,0 µm.

4. Composant selon la revendication 1, **caractérisé en ce que** l'épaisseur de la couche anticorrosive correspond à un quart de la rugosité superficielle de la piste de roulement du composant durci de palier à roulement.

5. Composant selon la revendication 3, **caractérisé en ce que** l'épaisseur maximale de la couche ZnNi est de 1,5 µm.
